# EUROPÄISCHE PATENTANMELDUNG

(11) **EP 0 670 260 A1**
(43) Veröffentlichungstag der Anmeldung: **06.09.1995**
(21) Anmeldenummer: 95101930.6
(22) Anmeldetag: 13.02.1995
(51) Int. Cl.: B62K 15/00, B62K 19/36

(54) **Fahrradsattelträger-Einbau**

(30) Priorität: 03.03.1994 DE 9403617 U
(71) Anmelder: DIAMANT FAHRRADWERKE GMBH, D-09117 Chemnitz (DE)
(72) Erfinder: Müller, Hartwig, Dr.-Ing., D-09126 Chemnitz (DE)
(74) Vertreter: Grünecker, Kinkeldey, Stockmair & Schwanhäusser Anwaltssozietät

(57) **Zusammenfassung**

Bei einem Fahrrad (F), insbesondere einem Faltrad, bei dem ein vorderer Rahmenteil (V) mit dem hinteren Rahmenteil (H) am Tretlagergehäuse (T) lösbar und in einem unterhalb des Sattels (S) angeordneten Gelenk (G) schwenkbar verbunden ist, wobei der Sattel (S) mit zwei Sattelstützen (14) verstellbar und festklemmbar angeordnet ist, sind die Sattelstützen (14) in zwei hohlen Rahmenstreben (7) des hinteren Rahmenteils (H) teleskopartig verschiebbar geführt und ist auf dem oberen Ende (15) jeder Rahmenstrebe (7) eine die Sattelstütze (14) umfassende Spannmanschette (M) vorgesehen.

## Beschreibung

Die Erfindung betrifft ein Fahrrad gemäß dem Oberbegriff des Patentanspruchs 1.

Bei einem aus DE-39 31 798 B1 bekannten, als Faltrad ausgebildeten Fahrrad sind die Sattelstützen von hinten mittels eines Querteils und einer Spannschraube festgeklemmt. Die unteren Enden der Sattelstützen liegen frei. Abgesehen davon, daß diese Sattelhalterung mit den freiliegenden Sattelstützen im optischen Erscheinungsbild des hinteren Rahmenteils improvisiert wirkt und stört, werden die Sattelstützen in extrem kurzen Spannbereichen gehalten, was zu lokalen Überbeanspruchungen oder Beschädigungen fuhren kann. Ein fester Sitz des Sattels kann bei hohem Gewicht des Radfahrers und/oder bei unebenem Boden nicht gewährleistet werden. Die freiliegenden Sattelstützen-Enden verschmutzen in diesem exponierten Bereich rasch und stark, was die Verstellung des Sattels und seine ordnungsgemäße Festlegung grundsätzlich und auch zum Falten bzw. Aufbauen des Fahrrades erschwert. Das hinter den Sattelstützen angeordnete Gelenk ist im Hinblick auf möglichst kleine Abmessungen des gefalteten Fahrrades ungünstig, weil es lange obere Rahmenstreben des vorderen Rahmenteils erzwingt.

Der Erfindung liegt die Aufgabe zugrunde, ein Fahrrad der eingangs genannten Art zu schaffen, bei dem die Sattelhalterung harmonisch in das Erscheinungsbild des Fahrrades eingegliedert ist und jederzeit eine bequeme und leichtgängige Verstellung des Sattels möglich ist. Ferner sollen die vom Sattel ausgeübten Belastungen unter Vermeidung lokaler Lastkonzentrationen großflächig in den hinteren Rahmenteil eingeleitet werden. Gemäß einem Nebenaspekt sollen, gegebenenfalls unter Vermittlung der Sattelhalterung, möglichst kleine Abmessungen des gefalteten Fahrrades ermöglicht werden.

Die gestellte Aufgabe wird erfindungsgemäß mit den im Patentanspruch 1 enthaltenen Merkmalen gelöst.

Da bei dieser Ausbildung die Sattelstützen teleskopartig in die Rahmenstreben eintauchen und in direkter Verlängerung der Rahmenstreben verlaufen, ergibt sich ein optisch gefälliger Gesamteindruck. Die in den Rahmenstreben geführten Sattelstützen sind gegen Verschmutzung und Korrosion abgeschirmt. Der Sattel läßt sich jederzeit leichtgängig verstellen. Die Belastungen werden großflächig in die beiden Rahmenstreben eingeleitet, was lokale Belastungskonzentrationen ausschließt. Die Spannmanschette ist optisch unauffällig, jedoch statisch tragfähig in den Gelenkbereich eingegliedert, der sich kompakt und grazil ausbilden läßt. Dank der beiden Spannmanschetten ergibt sich eine sichere, belastbare und vor allem sehr seitenstabile Festlegung des Sattels bei jeder gewünschten Höheneinstellung.

Bei der Ausführungsform gemäß Anspruch 2 übernehmen die Spannmanschetten die zusätzliche Funktion, die für das Gelenk zwischen dem vorderen und dem hinteren Rahmenteil erforderlichen Widerlager zu schaffen. Dies ermöglicht eine kompakte Ausbildung des Bereichs des Gelenks und der Sattelhalterung.

Bei der Ausführungsform gemäß Anspruch 3 ist das Gelenk nach vorne gesetzt, um die oberen Rahmenstreben des vorderen Rahmenteils im Hinblick auf ein möglichst kleines Faltmaß zu verkürzen. Dadurch ergibt sich eine Kinematik, mit der das Hinterrad sehr weit nach vorne verlagerbar und die Vorderradgabel sehr weit zum Tretlager schwenkbar wird. Die Abmessungen zwischen der dann freien Hinterseite des Hinterrades und der Vorderradgabel werden im gefalteten Fahrrad optimal klein. Diese Ausführungsform hat eigenständige Bedeutung unabhängig von der Sattelhalterung und ist auch für Falträder anwendbar, die eine andere Art der Sattelhalterung oder keine Sattelhalterung besitzen. In Verbindung mit den Spannmanschetten der Sattelhalterung hat das nach vorne gesetzte Gelenk den Vorteil einer einfachen Betätigung der Sattelhalterung von hinten her, wo gute Zugriffsmöglichkeiten bestehen.

Die Ausführungsform gemäß Anspruch 4 ist vorteilhaft, weil die Spannmanschette eine leichtgängige Schiebeführung für die Sattelstütze bildet und unter Verformung durch das Spannelement für einen unverrückbaren Sitz des Sattels auch bei hohem Gewicht des Radfahrers bzw. bei unebenem Untergrund sorgt.

Eine baulich einfache und zweckmäßige Ausführungsform geht aus Anspruch 5 hervor. Die Sattelstütze wird an praktisch allen Flächen gleichförmig geklemmt. Die Teilung der Spannmanschette in zwei Formstücke ist herstellungs- und montagetechnisch günstig. Die Sattelstütze wird zweckmäßigerweise hauptsächlich mit dem Querschenkel festgeklemmt, der außen von dem Querschenkel eines anderen Formstücks übergriffen und relativ zu diesem durch das Spannelement bewegbar ist.

Die Ausführungsform gemäß Anspruch 6 ermöglicht eine besonders einfache und kostengünstige Ausbildung zumindest eines Formstücks.

Alternativ ist auch die Ausführungsform gemäß Anspruch 7 vorteilhaft, bei der ein Formstück besonders einfach herzustellen und anzubringen ist.

Bei der Ausführungsform gemäß Anspruch 8 werden nicht nur die beiden Rahmenstreben fest miteinander verbunden, sondern auch die bei festgeklemmten Sattelstützen übertragenen Belastungen gleichförmig in die Rahmenstreben übergeleitet. Die Spannmanschette bleibt als dachförmiger Abschluß auf den beiden oberen Enden der so statisch tragfähig und montagetechnisch günstig verbundenen Rahmenstreben optisch im Hintergrund, was das Erscheinungsbild harmonisiert. Eine Schweißverbindung ist kostengünstig und zuverlässig herstellbar und dauerhaft hoch belastbar.

Bei der Ausführungsform gemäß Anspruch 9 ergibt sich eine ästhetisch ansprechende Eingliederung der Sattelhalterung und der Sattelstützen in das Gesamtbild des Fahrrades, weil beide Formteile auf dem oberen Ende der hohlen Rahmenstrebe befestigt sind und das obere Ende jeder Rahmenstrebe frei über den Anschluß der hinteren Rahmenstrebe nach oben steht. Durch das Ansetzen der hinteren Rahmenstrebe unterhalb des oberen Endes der hohlen Rahmenstrebe wird eine statisch günstige und ansprechende Konfiguration des hinteren Rahmendreiecks ermöglicht.

Die feste Klemmung der Sattelstütze einerseits und die homogene Verbindung der beiden Rahmenstreben andererseits sind bei der Ausführungsform gemäß Anspruch 10 gewährleistet. Obwohl die Spannmanschette aus den beiden Formstücken zusammengesetzt ist, fungiert sie wie eine einstückige Einheit.

Eine besonders wichtige Maßnahme geht aus Anspruch 11 hervor. Der innerhalb des Gesamtverbundes beweglich bleibende Querschenkel läßt sich mit relativ geringen Betätigungskräften bewegen bzw. deformieren, um die Sattelstütze sicher festzulegen. Zweckmäßigerweise stellt sich der Querschenkel nach Lösen der Spannschraube selbsttätig von der Sattelstütze weg, so daß diese mit genau vorherbestimmbarem Schiebewiderstand leicht verstellbar ist.

Einfach zu handhaben ist die Ausführungsform gemäß Anspruch 12.

Bei der Ausführungsform gemäß Anspruch 13 werden die bei Gebrauch des Faltrades gegebenenfalls hohen Belastungen im Gelenkbereich günstig auf die beiden Rahmenteile verteilt. Der Gelenkbereich ist verformungssteif, so daß die Leichtgängigkeit des Gelenks zum Zusammenlegen des Faltrades über lange Gebrauchsdauer erhalten bleibt. Das Gelenk läßt sich leicht an eine für ein günstiges Faltmaß zweckmäßige Stelle positionieren, und zwar entweder hinter die Sattelstützen oder vor die Sattelstützen.

Die Ausführungsform gemäß Anspruch 14 ist vorteilhaft, um die gegebenenfalls hohen Belastungen vom Sattel großflächig in den hinteren Rahmenteil zu übertragen und das eine Formstück zu entlasten. Bei entsprechend kräftiger Auslegung des Formstücks ist die Stützen jedoch auch entbehrlich.

Die Ausführungsform gemäß unabhängigem Anspruch 15 ist nicht eingeschränkt auf ein als Faltrad ausgebildetes Fahrrad, sondern ist für jede Fahrradtype zweckmäßig, bei der zwei hohle Rahmenstreben unterhalb des Sattels vorgesehen sind.

Das Fahrrad gemäß unabhängigem Anspruch 16 zeichnet sich durch ein optimal kleines Faltmaß aus, weil durch das nach vorne versetzte Gelenk eine sehr günstige Faltkinematik erzielbar ist. Dieses Prinzip ist von eigenständiger Bedeutung und unabhängig von der Ausbildung der Sattelhalterung.

Anhand der Zeichnung werden Ausführungsformen des Erfindungsgegenstandes erläutert. Es zeigen:
- Fig. 1: ein Faltrad in gebrauchsfertigem Zustand, wobei gegebenenfalls vorgesehene Anbauteile und Antriebskomponenten weggelassen sind,
- Fig. 2: das Faltrad von Fig. 1 in gefaltetem Zustand,
- Fig. 3 - 6: eine erste Detailvariante in einander zugeordneten Ansichten,
- Fig. 7: eine perspektivische Explosionsdarstellung der Ausführungsvariante der Fig. 3 - 6,
- Fig. 8: eine perspektivische Explosionsdarstellung einer anderen Ausführungsform,
- Fig. 9: eine Draufsicht auf die Ausführungsform von Fig. 8,
- Fig. 10: eine perspektivische Explosionsdarstellung einer weiteren Ausführungsvariante,
- Fig. 11: eine Seitenansicht einer anderen Ausführungsform eines Faltrades in gebrauchsfertigem Zustand, und
- Fig. 12: eine schematisierte Seitenansicht des Faltrades von Fig. 11 in zusammengefaltetem Zustand.

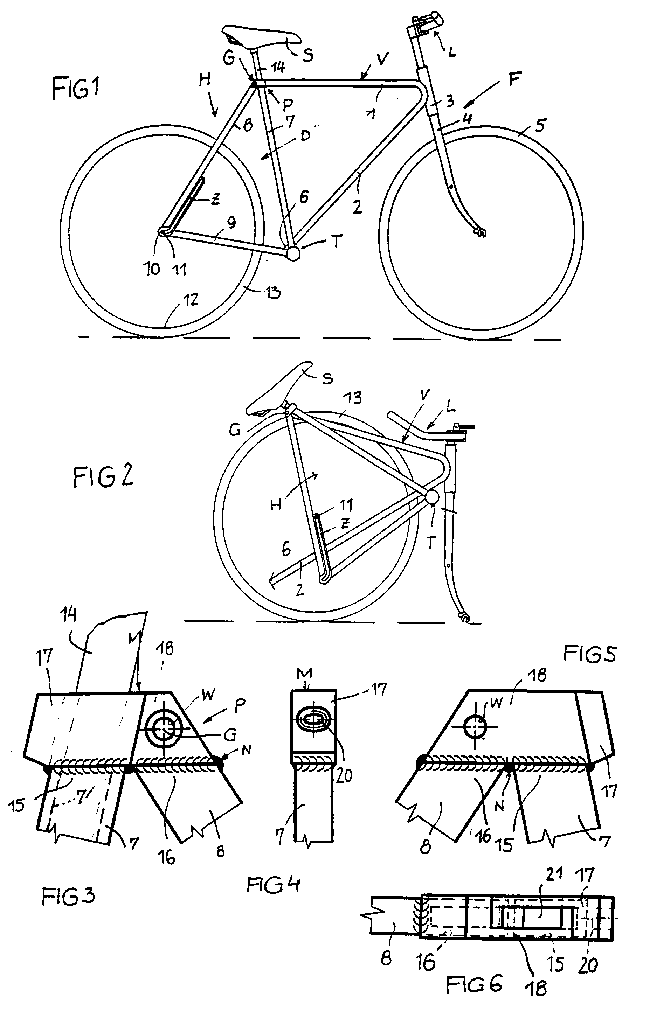

Ein als Faltrad ausgebildetes Fahrrad F gemäß den Fig. 1 und 2 weist einen vorderen Rahmenteil V und einen hinteren Rahmenteil H auf. Der vordere Rahmenteil V besteht aus jeweils zwei quer zur Fahrradhauptebene beabstandeten, parallelen oberen Rahmenstreben 1, die mit zwei beabstandeten unteren Rahmenstreben 2 verbunden sind und ein Lenkerrohr 3 zwischen sich aufnehmen, in dem eine Vordergabel 4 für ein Vorderrad 5 und ein Lenker L gelagert sind. Die beiden unteren Enden 6 der Rahmenstreben 2 sind mit einem Tretlagergehäuse T lösbar verbunden, während die hinteren Enden der oberen Rahmenstreben 1 über ein Gelenk G unterhalb des Sattels S miteinander und mit dem hinteren Rahmenteil H verbunden sind.

Der hintere Rahmenteil H weist zwei parallele und dekkungsgleiche Dreiecksrahmen D auf, zwischen denen ein einen Reifen 13 aufweisendes Hinterrad 12 mit seiner Achse 11 in Achsaufnahmen 10 gelagert ist. Jeder Dreiecksrahmen D besteht aus einer hinteren Rahmenstrebe 8, einer unteren Rahmenstrebe 9 und einer vorderen Rahmenstrebe 7. Die beiden Dreiecksrahmen D sind über das Tretlagergehäuse T einerseits und über das Gelenk G andererseits miteinander verbunden. Im Bereich des Gelenks G ist eine Sattelhalterung P angebracht. Der Sattel S ist mit zwei quer zur Fahrradhauptebene beabstandeten, parallelen Sattelstützen 14 in den Rahmenstreben 7 verschiebbar geführt und mittels der Sattelhalterung P in beliebigen Einstellagen festlegbar.

Das Fahrrad F gemäß Fig. 1 läßt sich zum leichteren Verstauen zusammenfalten (Fig. 2). Zunächst wird das Vorderrad 5 ausgebaut. Dann wird der Lenker L zusammengeklappt und der Sattel S eingeschoben. Die unteren Enden 6 der Rahmenstreben 2 werden vom Tretlagergehäuse T gelöst, ehe das Hinterrad 12 in den Achsaufnahmen 10 gelöst und mit seiner Achse 11 in Führungsschlitzen Z entlang den Rahmenstreben 8 so weit nach oben verschoben wird, bis der Reifen 13 in etwa gleichzeitig das Gelenk G und das Tretlagergehäuse T berührt und zwischen den Rahmenstreben 7 hindurchtritt. Dann wird der vordere Rahmenteil V relativ zum hinteren Rahmenteil H und im Gelenk G verschwenkt, bis die unteren Enden 6 der Rahmenstreben 2 zwischen den Dreiecksrahmen D hindurchgreifen und das Tretlagergehäuse T nahe beim Lenkerrohr 3 steht.

Bei der Sattelhalterung P gemäß den Fig. 3 - 6 ist eine Spannmanschette M vorgesehen, die auf den oberen Enden 15, 16 der Rahmenstreben 7 und 8 befestigt ist, z.B. durch Anschweißen (Schweißnähte N). Zumindest jede Rahmenstrebe 7 ist hohl und hat einen in etwa rechteckigen oder quadratischen Innenquerschnitt (Hohraum 7'). Die Sattelstütze 14 hat einen entsprechenden Querschnitt, so daß sie in einem Schiebesitz im Hohlraum 7' verschiebbar geführt ist und sich vollständig einschieben läßt. Die Spannmanschette M bildet mit ihrem Inneren 21 eine maßgenaue Verlängerung des Hohlraums 7'. Die Spannmanschette M besteht aus zwei Formstücken 17, 18 mit jeweils C-förmigem Querschnitt. Im Formstück 17 ist in einer Gewindebohrung eine Spannschraube 20 vorgesehen. Im Formstück 18 ist ein als Querbohrung ausgebildetes Widerlager für die Achse des Gelenks G vorgesehen, mit dem die beiden Dreiecksrahmen D miteinander und der hintere Rahmenteil H mit dem vorderen Rahmenteil V verbunden sind.

Das Formstück 17 ist auf das obere Ende 15 der Rahmenstrebe 7 aufgeschweißt. Das Formstück 18 ist hingegen auf beide obere Enden 15 und 16 der Rahmenstreben 7, 8 aufgeschweißt. Zusätzlich sind (Fig. 5, N) gegebenenfalls die beiden Formstücke 17, 18 mit einer querliegenden Schweißnaht N miteinander verschweißt, die auch die beiden Rahmenstreben 7, 8 miteinander verbindet.

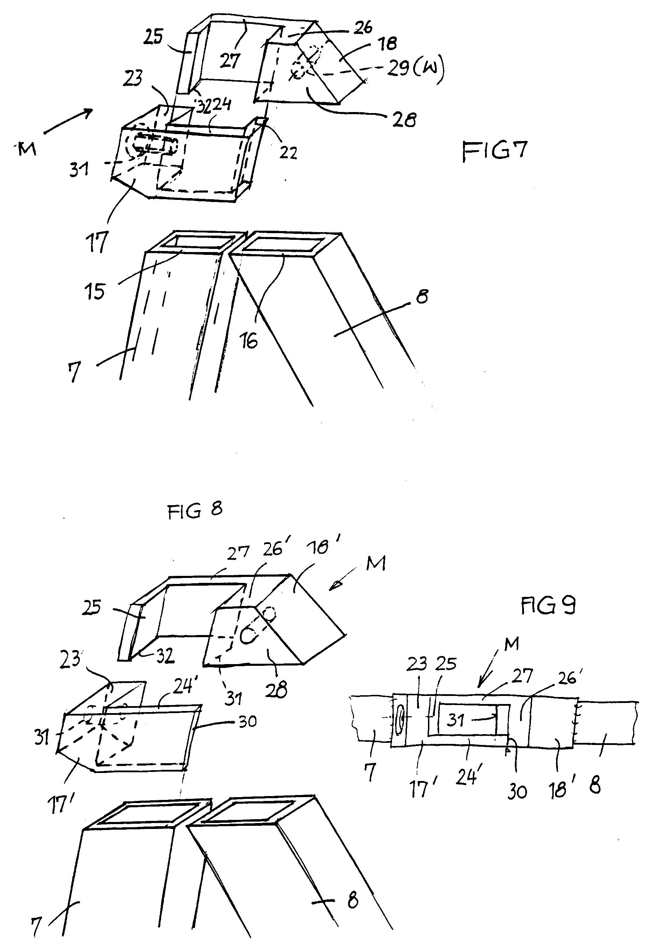

Gemäß Fig. 7, in der die einzelnen Komponenten vor der Montage gezeigt sind, weist das Formstück 17 einen schmaleren Querschenkel 22 auf, der über einen Längsschenkel 24 mit einem stärkeren Querschenkel 23 verbunden ist, in dem eine Gewindebohrung 31 für die Spannschraube 20 vorgesehen ist, deren Gewindeachse senkrecht zur Innenfläche des Querschenkels 23 liegt.

Das Formstück 18 weist einen schmalen Querschenkel 25 auf, der über einen Längsschenkel 27 mit einem stärkeren Querschenkel 26 verbunden ist. Der Querschenkel 26 ist mit einem Fortsatz 28 einstückig ausgebildet, in dem eine Querbohrung 29 das Widerlager W für das Gelenk G bildet. Die beiden Formstücke 17 und 18 sind mit ihren offenen Seiten zueinanderweisend derart ineinander verschränkt, daß der Querschenkel 23 des Formstücks 17 den Querschenkel 25 des Formstücks 18 außen übergreift, während der Querschenkel 26 des Formstücks 18 den Querschenkel 22 des Formstücks 17 ebenfalls außen übergreift. Die in den Fig. 3 - 6 angedeuteten Schweißnähte N lassen den mit 32 angedeuteten unteren Rand des Querschenkels 25 frei, so daß sich der Querschenkel 25 durch die Spannschraube 20 frei verformen läßt, um die Sattelstütze 14 festzuspannen.

Die Ausführungsform gemäß Fig. 7 könnte dahingehend modifiziert sein, daß beide Querschenkel 25, 26 des Formteils 18 beide Querschenkel 23, 22 des Formstücks 17 außen übergreifen, wobei dann der Querschenkel 23 freibeweglich belassen wird.

Bei der alternativen Ausführungsform gemäß Fig. 8 sind die Formstücke 17', 18' gegenüber den Formstücken 17, 18 von Fig. 7 modifiziert. Das Formstück 17' hat L-förmigen Querschnitt und besteht aus dem Querschenkel 23 und einem einzigen Längsschenkel 24', der mit seiner Endfläche 30 stumpf an den Querschenkel 26' des Formteils 18' stößt. Der Querschenkel 25 des Formstücks 18' wird außen vom Querschenkel 23 übergriffen, wobei der Querschenkel 25 im Bereich seines unteren Randes 32 von der Rahmenstrebe 7 getrennt und deshalb freibeweglich ist.

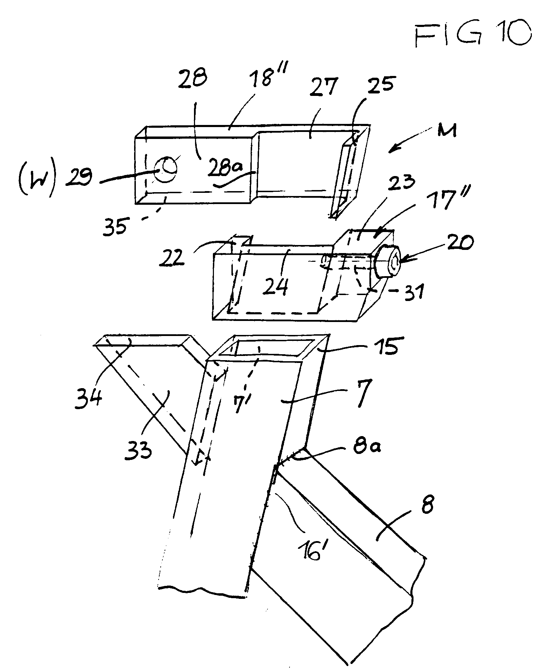

In der Draufsicht von Fig. 9 ist eine untere Kante 31 des Querschenkels 26' erkennbar, die mit der Innenkante des Hohlraums der Rahmenstrebe 7 zusammenstimmt. Ferner zeigt die Fig. 9, wie die Querschenkel 23, 25 einander übergreifen.

Die Ausführungsform gemäß den Fig. 8 und 9 könnte weiter dadurch modifiziert werden, daß der Querschenkel 25 des Formstücks 18' den Querschenkel 23 des Formstücks 17' außen übergreift. Ferner könnte bei der Ausführungsform der Fig. 8 und 9 der Längsschenkel 24' mit dem Querschenkel 26' durch eine nach oben verlaufende Schweißnaht verbunden sein, um die Spannmanschette M auch in diesem Bereich zu schließen.

Die Rahmenstreben 7, 8 sind zweckmäßigerweise Stahl- oder Leichtmetallprofile. Die Formstücke 17, 18, 17', 18' sind entweder aus Stahl hergestellt oder aus hochfesten Leichtmetallegierungen.

Anstelle einer Spannschraube 20 könnte auch ein Schnellspannverschluß für dieselbe Funktion vorgesehen sein, der sich mit der Hand und ohne Werkzeug anziehen und lösen läßt, und dazu dient, den Querschenkel 25 zum Festlegen der Sattelstütze gegen diese zu pressen oder zum Verstellen entspannen zu lassen.

Die vorbeschriebene, erfindungsgemäße Lösung ist nicht beschränkt auf ein Faltrad. Die Sattelhalterung P mit den Spannmanschetten M kann bei jedem Fahrrad F zweckmäßig sein, das zwei zumindest oben hohle, parallele Rahmenstreben unterhalb des Sattels aufweist.

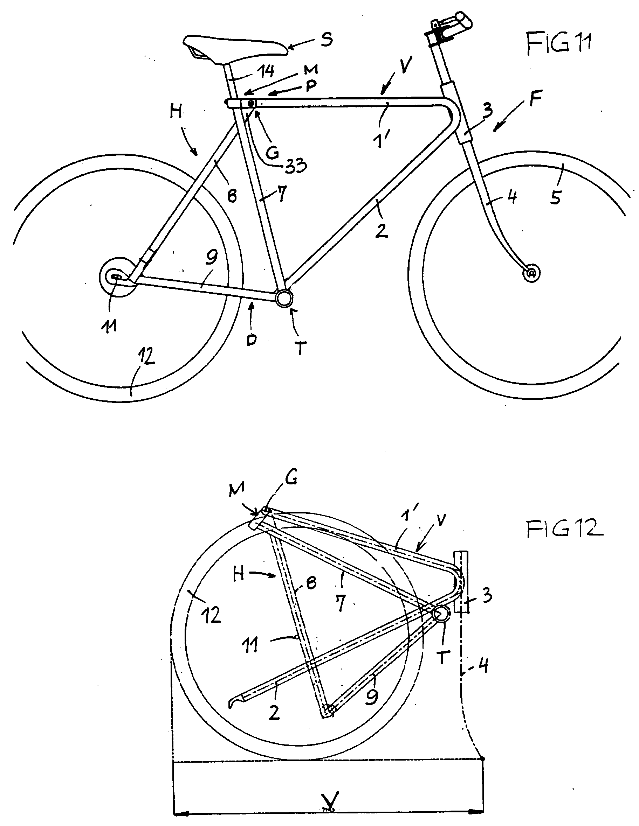

Bei der Ausführungsform gemäß Fig. 10 ist im Unterschied zu den vorhergehenden Ausführungsformen jede hintere Rahmenstrebe 8 unterhalb des freien Endes 15 der hohlen Rahmenstrebe 7 an die Hinterseite der hohlen Rahmenstrebe 7 angeschweißt (Schweißnaht 8a). Dadurch steht das freie Ende 15 der hohlen Rahmenstrebe 7 gegenüber dem Ende 16' der Rahmenstrebe 8 nach oben vor. Die Spannmanschette besteht wiederum aus zwei Formstücken 17'', 18'', die ineinander verschränkt auf dem oberen Ende 15 der hohlen Rahmenstrebe 7 festgelegt sind. Das Formstück 17'' hintergreift mit seinem Querschenkel 23 den schräg verlaufenden Querschenkel 25 des anderen Formstückes 18'' von außen. Das Spannelement 20 ist im Querschenkel 23 verschraubbar und beaufschlagt den Querschenkel 25. Das Spannelement 20, das in einer Gewindebohrung 31 verschraubbar ist, läßt sich von der Hinterseite der Sattelstützen 14 (in Fig. 10 nicht gezeigt) betätigen. Der andere Querschenkel 22, der sich an den Längsschenkel 24 anschließt, ist in Querrichtung verkürzt und hintergreift eine Schulter 28a des Fortsatzes 28 des anderen Formstückes 18''. Zwischen der Schulter 28a und dem Quersteg 25 verläuft ein gerader Längsschenkel 27, dessen Stärke in etwa der Wandstärke der hohlen Rahmenstrebe 7 entspricht. Der Fortsatz 28 ist dicker ausgebildet als der Längsschenkel 27 und enthält in Form einer Bohrung 29 das Widerlager W für das Gelenk zwischen dem vorderen und dem hinteren Rahmenteil V, H. Die beiden Formstücke 17'' und 18'' sind auf dem oberen Ende 15 der hohlen Rahmenstrebe 7 festgeschweißt, wobei zweckmäßigerweise der Querschenkel 25 an seiner Unterseite nicht mit dem oberen Ende 15 verschweißt wird. Das Widerlager W liegt bei dieser Ausführungsform - bezogen auf das Fahrrad F (Fig. 11) - vor den Sattelstützen 14, und zwar zweckmäßigerweise mit einem Abstand, der in etwa der Weite der hohlen Rahmenstrebe 7 entspricht.

Zusätzlich kann eine Stütze 33 an der Vorderseite der hohlen Rahmenstrebe 7 angeschweißt sein, aus ästhetischen Gründen in etwa in Verlängerung der hinteren Rahmenstrebe 8. Die Stütze 33 ist eine Art Knotenblech und weist eine Stützfläche 34 für eine Unterseite 35 des Fortsatzes 28 auf. Der Fortsatz 28 kann mit der Stütze 33 verschweißt sein, um die Belastungen zwischen den vorderen und hinteren Rahmenteilen V, H großflächig zu übertragen und den Fortsatz 28 abzustützen. Bei entsprechend stabiler Ausbildung des Fortsatzes 28 und der Formstücke 17'', 18'' kann die Stütze 33 auch entfallen.

Durch die nach vorne gesetzte Position des Widerlagers W für das Gelenk G ergibt sich eine wünschenswerte Verkürzung der oberen Rahmenholme 1' des Rahmenvorderteils V und eine zum Falten besonders vorteilhafte Kinematik, mit der das Hinterrad 12 sehr weit in den hinteren Rahmenteil H hineinbewegbar ist und das vordere Gabelrohr 3 mit der Vorderradgabel 4 sehr weit zum Tretlagergehäuse T verschwenkbar sind. Es ergeben sich dadurch sehr günstige Abmessungen für das zusammengefaltete Fahrrad (Fig. 12), dessen größte Faltabmessung V nur geringfügig größer als der Außendurchmesser des Hinterrades ist.

In dem Fahrrad F gemäß den Fig. 11 und 12 läßt sich die Verkleinerung der Faltabmessungen durch das nach vorne verlegte Gelenk G erreichen, und zwar unabhängig von der Ausbildung der Sattelhalterung P. Beim gezeigten Ausführungsbeispiel haben die Manschetten M neben der Aufgabe des Festklemmens der Sattelstützen die zusätzliche Aufgabe, die Kräfte im Gelenk G in den hinteren Rahmenteil einzuleiten und die Stabilität des Fahrrades zu erhöhen. Unterstützt wird dies durch die Stütze 33, die nach Art eines Knotenbleches wirkt und den Gelenkbereich nach allen Richtungen aussteift. Die Stütze 33 könnte bei entsprechender Ausbildung jeder Manschette M auch weggelassen werden. Im aufgebauten Zustand des Fahrrades F treten die baulichen Maßnahmen zum Zusammenfalten optisch fast vollständig in den Hintergrund, weil durch den in Fig. 11 erkennbaren Anschluß der hinteren Rahmenstreben 8 an den nach oben verlaufenden Rahmenstreben 7 das von herkömmlichen Fahrrädern vertraute Erscheinungsbild vermittelt wird.

## Patentansprüche

1. Fahrrad (F), insbesondere Faltrad, mit einem vorderen Rahmenteil V) und mit einem zwei vom Sattel (S) nach unten weisende, hohle und parallele Rahmenstreben (7) enthaltenden hinteren Rahmenteil (H), an dem ein Tretlagergehäuse (T), der mit zwei Sattelstützen (14) verstellbar und festklemmbar angebrachte Sattel (S) und ein Gelenk (G) mit senkrecht zur Fahrradhauptebene liegender Gelenkachse angeordnet sind, wobei der vordere Rahmenteil (V) mit dem hinteren Rahmenteil (H) am Tretlagergehäuse (T) lösbar und im Gelenk (G) schwenkbar verbunden ist, **dadurch gekennzeichnet**, daß die Sattelstützen (14) in den zwei hohlen Rahmenstreben (7) teleskopartig verschiebbar geführt sind, und daß auf dem oberen Ende (15) jeder Rahmenstrebe (7) eine die Sattelstütze (14) umfassende Spannmanschette (M) vorgesehen ist.

2. Fahrrad nach Anspruch 1, **dadurch gekennzeichnet**, daß die beiden Spannmanschetten (M) Widerlager (W, 29) für die Gelenkachse aufweisen.

3. Fahrrad nach Anspruch 2, **dadurch gekennzeichnet**, daß die Widerlager (W, 29) an der zum vorderen Rahmenteil (V) weisenden Seite der Sattelstützen (14) angeordnet sind.

4. Fahrrad nach Anspruch 1, **dadurch gekennzeichnet**, daß die Spannmanschette (M) mit ihrem Inneren (21) eine maßgenaue, gerade Verlängerung (leichter Schiebesitz der Sattelstütze 14) des im Querschnitt in etwa quadratischen oder rechteckigen Hohlraums (7') der Rahmenstrebe (7) bildet und in Richtung einer Querschnitts-Hauptachse mittels eines Spannelements (20) verformbar ist.

5. Fahrrad nach Anspruch 4, **dadurch gekennzeichnet**, daß die Spannmanschette (M) zwei mit C-förmigem Querschnitt ausgebildete Formstücke (17, 17'', 18, 18'') aufweist, die mit ihren offenen Innenseiten zueinanderweisend derart ineinander verschränkt sind, daß ein Querschenkel (25, 23; 26, 22; 28a) eines Formstücks (17, 17'' oder 18, 18'') einen Querschenkel (23, 25; 22, 26) des anderen Formstücks außen übergreift.

6. Fahrrad nach Anspruch 4, **dadurch gekennzeichnet**, daß die Spannmanschette (M) zwei mit C-förmigem Querschnitt ausgebildete Formstücke aufweist, die mit ihren offenen Innenseiten zueinanderweisend derart ineinander verschränkt sind, daß die beiden Querschenkel des einen Formstücks die beiden Querschenkel des anderen Formstücks außen übergreifen.

7. Fahrrad nach Anspruch 4, **dadurch gekennzeichnet**, daß die Spannmanschette (M) zwei Formstücke (17', 18') aufweist, von denen das eine (18') einen C-förmigen und das andere (17') einen L-förmigen Querschnitt aufweist, und die mit ihren offenen Innenseiten zueinanderweisend derart ineinander verschränkt sind, daß der Querschenkel (23) des L-förmigen Formstücks (17') einen Querschenkel (25) des C-förmigen Formstücks (18') außen oder innen übergreift und der Hochschenkel (24') des L-förmigen Formstücks (17') stumpf auf den anderen Querschenkel (26') des C-förmigen Formstücks (18') gerichtet ist.

8. Fahrrad nach wenigstens einem der Ansprüche 1 bis 8, **dadurch gekennzeichnet**, daß die Spannmanschette (M) als dachförmiger Abschluß (2) mit ihren oberen Enden (15, 16) konvergierend zusammengeführte Rahmenstreben (7, 8) des hinteren Rahmenteils (H) miteinander verbindet, wobei die oberen Enden (15, 16) gemeinsam an mindestens einem (18, 18') der Formstücke (17, 17', 18, 18') festgelegt, vorzugsweise festgeschweißt, sind.

9. Fahrrad nach wenigstens einem der Ansprüche 1 bis 7, **dadurch gekennzeichnet**, daß ein Ende (16') einer hinteren Rahmenstrebe (8) des hinteren Rahmenteils (H) unterhalb des Endes (15) der hohlen Rahmenstrebe (7) stumpf an der HInterseite der hohlen Rahmenstrebe (7) befestigt ist, und daß beide Formteile (17'', 18'') auf dem Ende (15) der hohlen Rahmenstrebe (7) befestigt sind.

10. Fahrrad nach wenigstens einem der Ansprüche 5 bis 9, **dadurch gekennzeichnet**, daß die beiden Formstücke (17, 18, 17', 17'', 18', 18'') zusätzlich direkt miteinander verbunden, vorzugsweise verschweißt, sind.

11. Fahrrad nach wenigstens einem der Ansprüche 5 bis 10, **dadurch gekennzeichnet**, daß wenigstens ein außen von einem Querschenkel (23) übergriffener anderer Querschenkel (25) vom oberen Ende (15) der zur Führung der Sattelstütze (14) vorgesehenen Rahmenstrebe (7) getrennt ist, und daß das Spannelement (20) am oder im einen Querschenkel (23) angeordnet ist und am anderen Querschenkel (25) von außen angreift.

12. Fahrrad nach den Ansprüchen 5 bis 11, **dadurch gekennzeichnet**, daß das Spannelement (20) eine im einen Querschenkel (23) verschraubbare Druckschraube mit in etwa senkrecht auf die Sattelstütze (14) gerichteter Schraubachse ist.

13. Fahrrad nach wenigstens einem der Ansprüche 3 bis 12, **dadurch gekennzeichnet**, daß ein Formstück (18, 18', 18'') einen Fortsatz (28) aufweist, in dem eine Querbohrung (29) als das Widerlager (W) für die Gelenkachse des Gelenks (G) angeordnet ist.

14. Fahrrad nach Anspruch 9, **dadurch gekennzeichnet**, daß zwischen der hohlen Rahmenstrebe (7) und dem zum vorderen Rahmenteil (V) weisenden Fortsatz (28) des einen Formstücks (18'') eine Stütze (33), vorzugsweise eine Art Knotenblech, vorgesehen ist, an der der Fortsatz (28) abgestützt, vorzugsweise befestigt, ist.

15. Fahrrad, dessen Rahmen zwei vom Sattel parallel nach unten weisende hohle Rahmenstreben enthält, relativ zu denen der Sattel mit zwei Sattelstützen verstellbar und festklemmbar angebracht ist, **dadurch gekennzeichnet**, daß die Sattelstützen (14) in den zwei hohlen Rahmenstreben (7) teleskopartig verschiebbar geführt sind, und daß auf dem oberen Ende (15) jeder Rahmenstrebe (7) eine die Sattelstütze (14) umfassende Spannmanschette (M) vorgesehen ist.

16. Fahrrad, mit einem vorderen Rahmenteil und mit einem zwei vom Sattel nach unten weisende, hohle und parallele Rahmenstreben enthaltenden hinteren Rahmenteil, an dem ein Tretlagergehäuse, der mit zwei Sattelstützen verstellbar und festklemmbar angebrachte Sattel und ein Gelenk mit senkrecht zur Fahrradhauptebene liegender Gelenkachse angeordnet sind, wobei der vordere Rahmenteil mit dem hinteren Rahmenteil am Tretlagergehäuse lösbar und im Gelenk schwenkbar verbunden ist, **dadurch gekennzeichnet**, daß das Gelenk (G) an der dem vorderen Rahmenteil (V) zugewandten Seite der und vor den hohlen Rahmenstreben (7) angeordnet ist.
